# EUROPÄISCHE PATENTANMELDUNG

(11) **EP 0 765 597 A1**
(43) Veröffentlichungstag der Anmeldung: **02.04.1997**
(21) Anmeldenummer: 96114766.7
(22) Anmeldetag: 14.09.1996
(51) Int. Cl.: A01F 12/26

(54) **Verfahren zum Herstellen eines Rostes eines Abscheidekorbs, Rost für einen Abscheidekorb und Abscheidekorb**

(30) Priorität: 22.09.1995 US 533530
(71) Anmelder: DEERE & COMPANY, Moline Illinois 61265-8098 (US)
(72) Erfinder: Harden, Philip Alan, Colona, Illinois 61241 (US)
(74) Vertreter: Feldmann, Bernhard

(57) **Zusammenfassung**

Ein Abscheidekorb (36, 38) einer Erntemaschine (10) ist mit einem Rost (72) versehen, der aus Stäben (74) und quer dazu verlaufenden Stangen (76) gebildet ist. Die Stäbe (74) und die Stangen (76) sind mittels Buckel- oder Warzenschweißverfahren miteinander verbunden.

## Beschreibung

Die Erfindung betrifft ein Verfahren zum Herstellen eines Rostes eines Abscheidekorbs, einen Rost für einen Abscheidekorb und einen Abscheidekorb.

Erntemaschinen, insbesondere Mähdrescher, weisen eine Gutbearbeitungsvorrichtung, herkömmlich mit einer Dresch- oder Abscheidetrommel auf, die das Erntegut über einen Abscheidekorb für Dresch- oder Trennzwecke zieht. Der Abscheidekorb enthält einen Rost oder ist als solcher ausgebildet, durch dessen Öffnungen herausgetrennte Bestandteile des Ernteguts abgesondert werden können. Herkömmlicherweise wird der Rost dadurch gebildet, daß quer zur Gutflußrichtung verlaufende Leisten, die zugleich die Abscheideleisten bilden, mit einer Vielzahl von Bohrungen versehen sind, durch die Drähte gezogen sind. Dieses Herstellungsverfahren wird unabhängig davon angewandt, ob es sich um eine nach dem Axial- oder dem Tangentialflußprinzip arbeitende Gutbearbeitungsvorrichtung handelt. Diese Herstellungsmethode ist sehr zeit- und kostenintensiv.

Aus der US-A-4,422,463 und der US-A- 4,192,322 ist es bereits bekannt, die Leisten mit Einbuchtungen zu versehen, in die die Drähte eingelegt und in deren Bereich die Drähte mit den Leisten verschweißt werden.

Desweiteren offenbart die US-A-5,024,631 und der entsprechende Prospekt CLAAS COMMANDOR 228, Druckvermerk 8/94(J.C.C.B.)dtsch. 15/247.083.6 einen Dreschkorb einer nach dem Tangentialprinzip arbeitenden Gutbearbeitungsvorrichtung, der aus einem Rahmen und drei Rosten zusammengesetzt ist. Der Rahmen ist aus Wangen und Leisten gebildet, auf die die Roste aufgelegt werden. Die Roste bestehen danach aus im Querschnitt gleichen Stäben, die sich überkreuzen und an den Berührungspunkten mit Kehlnähten verschweißt sind.

Das der Erfindung zugrunde liegende Problem wird darin gesehen, daß der Herstellungsaufwand bisheriger Roste zu aufwendig ist und kein kostengünstiger Abscheidekorb mit günstig herzustellenden Rosten zur Verfügung steht.

Dieses Problem wird erfindungsgemäß durch die Lehren der Patentansprüche 1, 4 bzw. 5 gelöst, wobei in den weiteren Patentansprüchen die Lösung in vorteilhafter Weise weiterentwickelnde Merkmale aufgeführt sind.

Aufgrund der Anwendung des Buckel- oder Warzenschweißverfahrens kann in einem einzigen Vorgang der gesamte Rost hergestellt werden, was zu einer hohen Kostensenkung und einer Verkürzung der Herstellungszeit führt. Dieser Herstellungsvorgang kann ganz oder nahezu vollkommen maschinell und automatisch durchgeführt werden, und zwar insbesondere dann, wenn die Stangen in eine gekrümmte Form eingelegt, anschließend die Stäbe auf den Stangen positioniert und schließlich zum Durchführen des Schweißvorgangs mittels Elektroden Strom an alle Stangen und Stäbe angelegt wird. Es reicht hierzu aus, daß sich die Stangen und Stäbe an lokal begrenzten Stellen berühren. Schweißverbindungen nach dem Buckel- oder Warzenschweißverfahren vermeiden zudem Schweißspritzer und Einbrände an den Nahtenden; sie führen zudem zu einer stoffschlüssigen Verbindung an der Berührungsfläche anstatt an deren Rand.

Wenn sich die Abmessungen der zur Verbindung vorgesehenen Stäbe und Stangen nicht verändern sollen, können Erhebungen vorgesehen werden, die während des Schweißvorgangs zerschmelzen und das Material für die Verbindung zur Verfügung stellen.

Ein unter Verwendung des Buckel- oder Warzenschweißverfahrens hergestellter Rost ist nicht nur kostengünstig, sondern auch von geringem Gewicht, da er keine Leisten bisheriger großer Abmessungen benötigt. Außerdem ist er so ausgebildet, daß er nur der Abscheidung dient, während die Kräfte im wesentlichen von dem Rahmen des Abscheidekorbs aufgenommen werden.

Ein Abscheidekorb mit Wangen und Leisten ist bei entsprechender Ausbildung geeignet, die Kräfte, die beim Auftreffen des Ernteguts auf den Rost entstehen, aufzunehmen und somit den Rost bzw. die Roste zu entlasten.

Wenn auch die Roste bzw. der Rost auf den Wangen und den Leisten selbst aufliegen könnten, so kann deren Lage gesichert werden, indem an der Innenseite der Wangen Schultern vorgesehen werden, auf denen die Roste zwischen den Wangen aufliegen. Auf diese Weise werden die Roste an mehreren Seiten gehalten.

Bei einem besonders breiten Rost oder hohen auftretenden Kräften kann einer Verbiegung des Rostes vorgebeugt werden, wenn zwischen seinen Seitenbereichen eine oder mehrere zusätzliche Wangen als Abstützung vorgesehen ist/sind.

Eine einfache Art, einen Rost auf dem Rahmen festzulegen, besteht darin, daß an dem Rahmen, vorzugsweise an der Innenseite von dessen Wangen Ösen angebracht werden, auf denen der Rost aufgelegt wird und die mittels Schrauben, Muttern und Scheiben mit dem Rost verbunden werden.

Zur endseitigen Festlegung des Rostes auf dem Rahmen kann eine Leiste vorgesehen werden, die von dem Rost hintergriffen wird, so daß er zwischen den Schultern und der Leiste gehalten wird. Diese Lösung hat einen weiteren Vorteil, wenn sich die Leiste an dem stromaufwärts liegenden Ende des Rostes befindet und sich dann kein Erntegut an dem Rost bzw. dessen Stangen festhängt.

Um den Abscheidekorb für verschiedene Erntegüter und bei unterschiedlichen Einsatzbedingungen nutzen zu können, ist eine Schwenklagerverbindung und eine Abscheidekorbeinstellvorrichtung vorgesehen, mit deren Hilfe es möglich ist, den Abscheidekorb unterschiedlich weit zu dem Rotor einzustellen.

In der Zeichnung ist ein nachfolgend näher beschriebenes Ausführungsbeispiel der Erfindung dargestellt. Es zeigt:
- Fig. 1: eine Erntemaschine mit einem Abscheidekorb in Seitenansicht und schematischer Darstellung,
- Fig. 2: einen Abschnitt des Abscheidekorbs in Seitenansicht,
- Fig. 3: den Abscheidekorb in seine Bestandteile zerlegt,

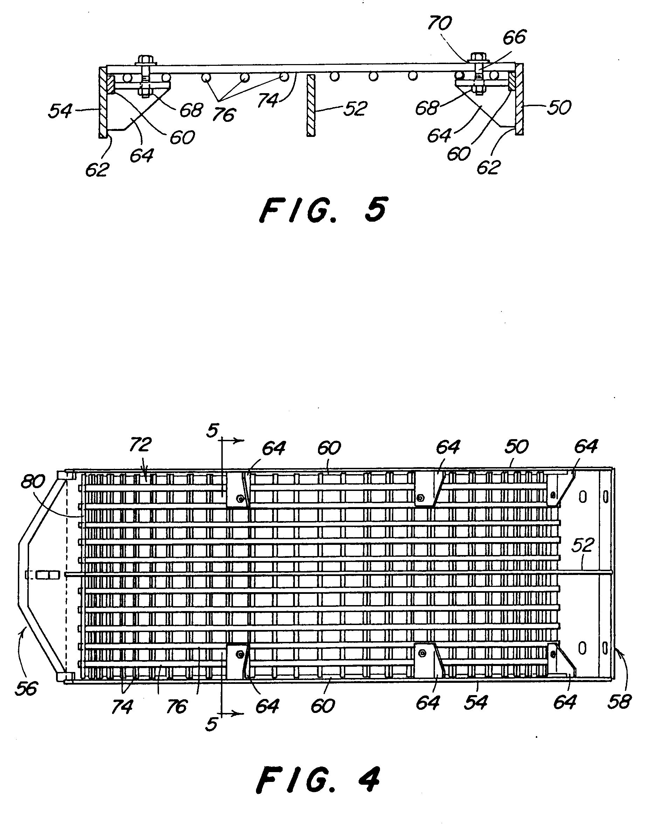

- Fig. 4: den Abscheidekorb in einer Ansicht gemäß den Pfeilen 4 in Figur 3 und
- Fig. 5: den Abscheidekorb in einem Schnitt entlang der Linie 5-5 und in der Blickrichtung der dazugehörigen Pfeile in Figur 4.

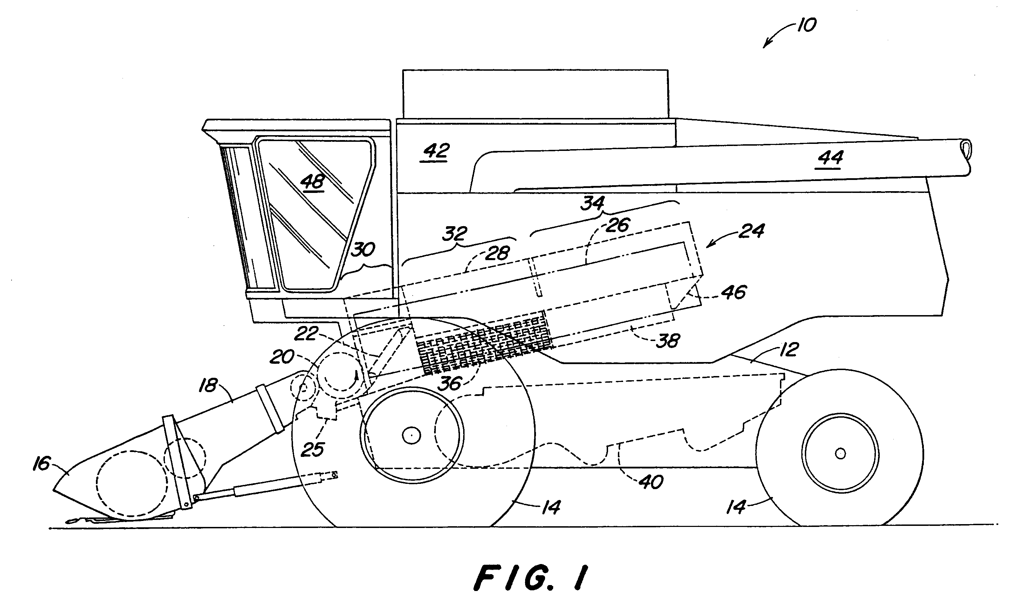

Figur 1 zeigt eine landwirtschaftliche Erntemaschine 10 in der Art eines Mähdreschers mit einem Tragrahmen 12 und diesem zugehörige Räder 14 zum Abstützen auf dem Boden, die sich von dem Tragrahmen 12 aus erstrecken. Eine Erntebergungsvorrichtung 16 wird dazu benutzt, Erntegut zu ernten und es einem Schrägförderer 18 zuzuführen. Das geerntete Gut wird von dem Schrägförderer 18 einer Zufuhrtrommel 20 aufgegeben, die es nach oben durch einen Einlaßübergangsabschnitt 22 einer Gutbearbeitungsvorrichtung 24 zuführt. Eine Steinfangmulde 25 befindet sich zwischen dem Schrägförderer 18 und der Zufuhrtrommel 20.

Die Gutbearbeitungsvorrichtung 24 drischt und trennt das Erntegut und enthält einen Rotor 26 und ein Gehäuse 28, die einen Eingangsbereich 30, einen Dreschbereich 32 und einen Trennbereich 34 definieren. Der Boden des Gehäuses 28 ist unterhalb des Dreschbereichs 32 mit einem Dreschkorb 36 und unterhalb des Trennbereichs 34 mit einem Trennkorb 38 versehen.

Sowohl der Dreschkorb 36 wie auch der Trennkorb 38 stellen einen Abscheidekorb dar.

Getreide und Spreu, die durch den Dreschkorb 36 und den Trennkorb 38 hindurchfallen, werden einem Reinigungssystem 40 aufgegeben, das die Spreu entfernt und das saubere Getreide einem nicht gezeigten Körnerelevator zuleitet. Der Körnerelevator gibt das Getreide zur vorübergehenden Lagerung in einen Korntank 42, von wo aus es auf einen Anhänger oder ein Fahrzeug mittels einer Entladeschnecke 44 abgeladen werden kann.

Die vorliegende Erfindung ist auf einen Abscheidekorb in der Form des Dreschkorbs 36 unterhalb des Dreschbereichs 32 der Gutbearbeitungsvorrichtung 24 gerichtet; allerdings kann die Erfindung auch bei einem Trennkorb 38 verwendet werden. Zudem ist die Verwendung bei einem konventionellen Dreschkorb, d. h. einem Dreschkorb in einer sich quer zur Fahrtrichtung erstreckenden im Tangentialfluß arbeitenden Dreschvorrichtung, möglich. Bei dem bevorzugten Ausführungsbeispiel handelt es sich jedoch um einen Dreschkorb 36 wie er aus der US-A-4,875,891 hervorgeht, deren Offenbarung hiermit einbezogen wird.

Außerdem kann die Erfindung auch bei einer Dreschmaschine oder dergleichen angewendet werden, bei der also nicht zugleich ein Erntevorgang stattfindet. Ferner kommen auch Mühlen und Schrotmaschinen als Einsatzgebiet in Frage.

Ausgedroschenes und einer Abscheidung unterworfenes Stroh wird von der Gutbearbeitungsvorrichtung 24 durch einen Auslaß 46 einer nicht gezeigten Abgabetrommel aufgegeben. Diese Abgabetrommel wirft das Stroh wiederum am Ende der Erntemaschine 10 hinaus. Die Bedienung der Erntemaschine 10 erfolgt von einer Fahrerkabine 48 aus.

Der Rotor 26 enthält eine nicht im einzelnen gezeigte hohle zylindrische Trommel mit einer Vielzahl von Gutbearbeitungselementen, die dazu benutzt werden, in das Gut einzudringen und es durch das Gehäuse 28 zu bewegen. Eine Vielzahl nicht gezeigter spiralförmiger Elemente innerhalb des Gehäuses 28 sorgen für eine nach hinten gerichtete Bewegung des Guts.

Der Dreschkorb 36 wird von drei Abschnitten gebildet, von denen jeder einen Rahmen 49 mit drei gekrümmten sich längs erstreckenden Wangen 50, 52, 54 aufweist. Diese gekrümmten sich längs erstreckenden Wangen 50, 52, 54 werden an ihren Endbereichen von sich quer erstreckenden Leisten 56 und 58 miteinander verbunden. Die beiden außenliegenden sich längs erstreckenden Wangen 50, 54 sind entlang ihrer Innenfläche 62 mit einer ebenfalls gekrümmten Schulter 60 versehen. Die außenliegenden Wangen 50, 54 tragen außerdem sechs Ösen 64, die an die Innenfläche 62 angeschweißt sind. Jede Öse 64 ist mit einer Schraube 66, einer Mutter 68 und einer Scheibe 70 jeweils für Montagezwecke bestückt.

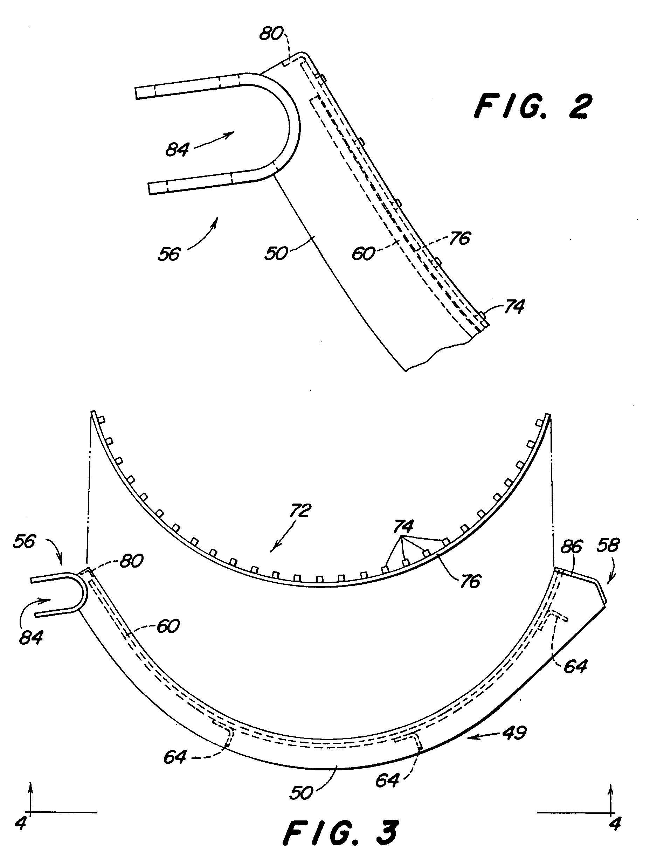

Ein Rost 72 des Dreschkorbs 36 nach der vorliegenden Erfindung enthält eine Vielzahl sich längs erstreckender rechteckiger Stäbe 74 aus Halbzeugmaterial, an die nach dem Warzenschweißverfahren drahtartige Stangen 76 geschweißt sind. Die Warzenschweißung des Rostes 72 erfolgt derart, daß zuerst die rechteckigen Stäbe 74 in einer Halterung befestigt werden, so daß sie eine gekrümmte Anordnung einnehmen, wie dies in Figur 3 gezeigt ist. Jeder Stab 74 ist mit einer Vielzahl in der Zeichnung nicht erkennbarer Warzen versehen, auf die sich- quer erstreckend die gekrümmten drahtartigen Stangen 76 aufgesetzt werden. Die drahtartigen Stangen 76 und die Stäbe 74 werden an eine Stromquelle angeschlossen. Sobald Strom an sie angelegt wird, findet ein Stromfluß durch die Stäbe 74 statt, wobei der elektrische Widerstand an den Warzen oder Buckeln am größten ist. Wenn sich der Widerstand erhöht, erhitzen sich die Warzen und verschweißen die Stangen 76 mit den Stäben 74.

Der Rost 72 wird auf den Rahmen 49 montiert, indem er zuerst unter eine Halteleiste 80 eingesetzt wird, die sich seitlich an der quer verlaufenden Leiste 56 befindet. Der Rost 72 ist zwischen der Halteleiste 80 und den Schultern 60 eingeschlossen. Der verbleibende Teil des Rostes 72 wird mittels der Schrauben 66 und der Scheiben 70 gehalten, die ihn gegen die Schultern 60 klemmen.

Die sich seitlich erstreckende Leiste 56 ist mit einer Schwenklagerverbindung 84 versehen, so daß der Dreschkorb 36 schwenkbar an die Gutbearbeitungsvorrichtung 24 angeschlossen werden kann. Die sich seitlich erstreckende Leiste 58 ist mit einem Abstandshalter 86 versehen, der eine Öffnung zur Aufnahme einer nicht gezeigten Dreschkorbabstandseinstellschraube enthält, mit der der Abstand des Dreschkorbs in bezug auf den Rotor 26 eingestellt werden kann.

Die vorliegende Erfindung sorgt für einen Rost 72 eines Dreschkorbs 36 von geringem Gewicht, der leicht hergestellt werden kann und der haltbar und leicht austauschbar ist.

## Patentansprüche

1. Verfahren zum Herstellen eines Rostes (72) eines Abscheidekorbs (36, 38) insbesondere einer Erntemaschine (10), der aus Stäben (74) und quer dazu erstreckenden Stangen (76) zusammengesetzt ist, dadurch gekennzeichnet, daß die Stäbe (74) und Stangen (76) aufeinander gelegt werden, um eine Kontaktstelle zu bilden und im Buckel- oder Warzenschweißverfahren miteinander verschweißt werden.

2. Verfahren nach Anspruch 1, dadurch gekennzeichnet, daß die Stäbe (74) und/oder Stangen (76) in ihrem Kontaktbereich mit Erhebungen versehen sind.

3. Verfahren nach Anspruch 1 oder 2, dadurch gekennzeichnet, daß die Stäbe (74) in eine gekrümmte Form eingelegt, anschließend die Stangen (76) auf den Stäben (74) positioniert und schließlich zum Durchführen des Schweißvorgangs Strom an die Stangen (76) und Stäbe (74) angelegt wird.

4. Rost (72) eines Abscheidekorbs (36, 38) insbesondere einer Erntemaschine (10), der aus gekrümmten Stäben (74) und quer dazu erstreckenden Stangen (76) zusammengesetzt ist, dadurch gekennzeichnet, daß die Stäbe (74) auf die dem Krümmungszentrum zugelegene Seite der Stangen (76) mittels Buckel- oder Warzenschweißverfahren aufgeschweißt sind.

5. Abscheidekorb (36, 38) insbesondere einer Erntemaschine (10) mit einem Rahmen (49) und einem gemäß einem oder mehreren der Ansprüche 1 bis 4 ausgebildeten Rost (72), dadurch gekennzeichnet, daß der Rahmen (49) aus wenigstens zwei sich in der Umfangsrichtung eines die Abscheidung bewirkenden Rotors (26) erstreckenden, gekrümmten oder auf einem Bogen verlaufenden Wangen (50, 54) und vorzugsweise zwei diese verbindenden Leisten (56, 58) besteht.

6. Abscheidekorb nach Anspruch 5, dadurch gekennzeichnet, daß an der Innenseite zweier äußerer und den Rost (72) zwischen sich aufnehmender Wangen (50, 54) Schultern (60) zur Auflage des Rostes (72) vorgesehen sind.

7. Abscheidekorb nach Anspruch 5 oder 6, dadurch gekennzeichnet, daß zwischen den äußeren Wangen (50, 54) wenigstens eine innere Wange (52) vorgesehen ist, deren dem Krümmungszentrum des Rostes (72) zugelegene Seite analog zu den entsprechenden Seiten der Schultern (60) verläuft.

8. Abscheidekorb nach einem oder mehreren der vorherigen Ansprüche 5 bis 7, dadurch gekennzeichnet, daß an der Innenseite der äußeren Wangen (50, 54) Ösen (64) vorgesehen sind, die der Auflage und Befestigung des Rostes (72) mittels Schrauben (66), Muttern (68) und Scheiben (70) dienen.

9. Abscheidekorb nach einem oder mehreren der vorherigen Ansprüche 5 bis 8, dadurch gekennzeichnet, daß die Leiste (58) mit einer Halteleiste (80) versehen ist, die zu den Schultern (60) und gegebenenfalls der inneren Wange (52) einen der Stärke der Stangen (76) entsprechenden Abstand aufweist.

10. Abscheidekorb nach einem oder mehreren der vorherigen Ansprüche 5 bis 9, dadurch gekennzeichnet, daß wenigstens eine der Wangen (50, 52, 54) einenends mit einer Schwenklagerverbindung (84) versehen ist, die der schwenkbaren Anbringung des Rahmens (49) an einem Tragrahmen (12) der Erntemaschine (10) dient, während anderenends eine Abscheidekorbeinstellvorrichtung angreift.
